(19) Europäisches Patentamt
European Patent Office
Office européen des brevets

(11) Publication number: **0 066 366**
**B1**

# (12) EUROPEAN PATENT SPECIFICATION

(45) Date of publication of patent specification: **20.11.86**

(51) Int. Cl.[4]: **C 08 G 69/48,** C 08 G 73/02, D 21 H 3/58

(21) Application number: **82302108.4**

(22) Date of filing: **23.04.82**

## (54) Branched polyamidoamines, method for their preparation and method of improving the wet strength of paper using them.

(30) Priority: **27.04.81 US 258158**
**04.01.82 US 336538**

(43) Date of publication of application:
**08.12.82 Bulletin 82/49**

(45) Publication of the grant of the patent:
**20.11.86 Bulletin 86/47**

(84) Designated Contracting States:
**DE FR GB IT NL SE**

(56) References cited:
**FR-A-2 013 630**
**FR-A-2 319 658**
**FR-E-2 128 881**

(73) Proprietor: **THE DOW CHEMICAL COMPANY**
**2030 Dow Center Abbott Road P.O. Box 1967**
**Midland, MI 48640 (US)**

(72) Inventor: **Tomalia, Donald Andres**
**463 W.Chippewa River Road**
**Midland Michigan 48640 (US)**
Inventor: **Wilson, Larry Ray**
**550 S. 8 Mile Road Route 6**
**Midland Michigan 48640 (US)**
Inventor: **Conklin, Jerry R.**
**2809 E. Ashman**
**Midland Michigan 48640 (US)**
Inventor: **Killat, George Robert**
**948 S. Meridian**
**Midland Michigan (US)**

(74) Representative: **Allard, Susan Joyce et al**
**BOULT, WADE & TENNANT 27 Furnival street**
**London EC4A 1PQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 066 366 B1

Courier Press, Leamington Spa, England.

**Specification**

The invention relates to branched polyamidoamines and a process for preparing same. In particular, polymers bearing a plurality of pendant amidoamine moieties are disclosed.

This invention also relates to ammonium polyamidoamines and to their use in the manufacture of paper.

As disclosed in US—A—3445441, polyamidoamines are useful as demulsifiers, corrosion inhibitors, and flocculants for the clarification of water. These polyamidoamines are normally produced by reacting nearly stoichiometric amounts of an alkyl acrylate with a polyamine such as polyalkylene polyamine. Unfortunately, such polymers, which are not curable, often do not have sufficient molecular weight to be useful in many applications requiring viscosity enhancement and/or high flocculant capability.

US—A—3305493 discloses the use of thermosetting adducts of the polyamidoamines and epichlorohydrin in the sizing of paper. Although such thermosetting adducts, after increase in molecular weight through cross-linking, have sufficient molecular weight to be useful in many applications, it is difficult to control the cross-linking reaction so that the formation of unwanted gels is prevented. On the other hand, if the cross-linking reaction is stopped prematurely, the resulting product does not exhibit the desired activity.

US—A—3200106 discloses a variety of derivatives of high molecular weight polyalkylene polyamines. One of these products is the condensation product of the polyamine with an alkyl acrylate. This condensation product bears pendant ester groups.

The branched polyamidoamines described herein possess several unique and surprising properties not shared by the substantially linear polyamidoamines described in the prior art. The branched polyamidoamines which bear a plurality of terminal primary amines possess exceptional utility as curing agents for epoxides. Those branched polyamidoamines bearing a plurality of terminal tertiary amine groups exhibit unexpected activity relative to linear polyamidoamines in the demulsification of oil in water emulsions. The branched polyamidoamines also exhibit enhanced performance as flocculants and dye retention additives.

In view of the foregoing deficiencies of the conventional polyamidoamines, it is also highly desirable to provide a polymer that has reproducible characteristics and has sufficient activity to be useful in applications such as wet strength additives in the manufacture of paper.

More particularly, the invention resides in a branched polyamidoamine having a weight average molecular weight of at least 550, as determined by low-angle laser light scattering. This polyamidoamine consists essentially of units corresponding to the formula I

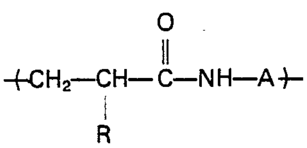

I

wherein R at each occurrence is independently hydrogen, methyl or ethyl; A is

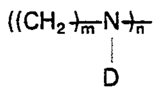

wherein m is an integer from 2 to 6 and n is an integer from 1 to 3; D at each occurrence is independently —H or corresponds to the formula II

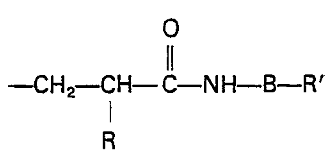

II

wherein R is as defined hereinbefore, B is

$((CH_2)_x - NR')_y$ or 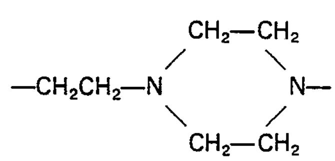

wherein x is an integer from 2 to 10, y is an integer from 1 to 6, and R' at each occurrence is independently —H, a $C_1$ to $C_4$ alkyl, or a $C_1$ to $C_4$ hydroxyalkyl. At least 10 percent, preferably at least 30 percent, of the groups represented by D correspond to formula II.

The present invention also resides in ammonium polyamidoamines bearing pendant ammonium moieties having cross-linking functionality. Surprisingly, while such ammonium polyamidoamines are very effective as wet strength additives in the manufacture of paper, the paper which has been treated with such ammonium polyamidoamines is sufficient brokable that it can be recycled.

Another aspect of this invention resides in a method for preparing ammonium polyamidoamines by contacting the branched polyamidoamine with an epihalohydrin under conditions sufficient to form pendant curable ammonium moieties on the branched polyamidoamine.

In yet another aspect, this invention is a method for improving the wet strength of paper by contacting the paper pulp with an amount of the ammonium polyamidoamine which is effective to increase the wet strength of the paper sheet formed from said pulp when said sheet is subjected to conditions sufficient to cross-link the polyamidoamine.

In addition to their utility in the manufacture of paper, the ammonium polyamidoamines of this invention are also useful as flocculants, dimension stabilizers for textiles such as wool, and tie coat adhesives.

Linear polyamidoamines are conveniently prepared in the manner described in US—A—3305493. In general, the linear polyamidoamine is prepared by contacting an alkylenediamine or a polyalkylene polyamine with the ethylenically unsaturated carboxylic compound, e.g., alkyl acrylate or methacrylate, acrylamide, acrylic acid or methacrylic acid, under reactive conditions. Preferably, the foregoing reactants are employed in stoichiometric ratio to form a linear polyamidoamine represented by the formula:

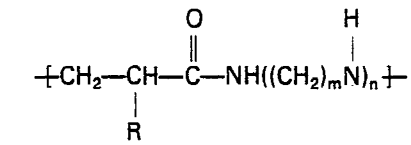

wherein R, m and n are as defined hereinbefore. Advantageously, the linear polyamidoamine has a weight average molecular weight (Mw) of at least 500, preferably at least 1000, most preferably from 3000 to 10,000.

When converting the linear polyamidoamine to a branched polyamidoamine, the linear polyamidoamine is contacted with an ethylenically unsaturated carboxylic compound under conditions sufficient to produce a Michaels addition reaction between an amine moiety of the linear polyamidoamine and the ethylenically unsaturated moiety of the carboxylic compound. Exemplary carboxylic compounds include α,β-ethylenically unsaturated carboxylic acids such as acrylic acid and methacrylic acid; α,β-ethylenically unsaturated amides such as acrylamide and methacrylamide; and esters of α,β-ethylenically unsaturated acids derived from primary alcohols having from 1 to 10 carbons. Of the foregoing carboxylic compounds, methyl acrylate and acrylamide are preferred, with methyl acrylate being especially preferred. The reaction of the unsaturated carboxylic compound with the linear polyamidoamine should be performed at a temperature at which substantial crosslinking of the polymer is avoided. Generally, such temperature is in the range from 0° to 200°C, with temperatures of from 20° to 100°C being preferred While the foregoing reaction can be conducted neat, it is generally desirable to employ a diluent which is a solvent for the polyamidoamine but which is substantially inert to the reactants. Water and lower alkanol, having from 1 to 4 carbons, are generally preferred diluents with methanol being most preferred.

The ratio of equivalents of the aforementioned unsaturated carboxylic compound to the equivalents of amino hydrogens present in the linear polyamidoamine can be varied to produce the desired substitution of pendant carboxylic groups on the polyamidoamine. If complete substitution is desired, a stoichiometric amount or an excess of the unsaturated carboxylic compound can be employed. However, if a lesser degree of substitution is desired, the reactants can be combined in the desired ratio and essentially completely reacted. The progress of this reaction can be monitored by infrared spectrophotometric analysis or other techniques known in the art. It is advantageous that at least 50 mole percent of the total amino hydrogens of the linear polyamidoamine be reacted with the unsaturated carboxylic compound in order to provide the ultimate ammonium polyamidoamine with the unique properties and advantages characteristic of the polymers of this invention. Preferably, at least 75 mole percent of amino hydrogens are reacted with polymers having from 90 to 100, mole percent of amino hydrogens reacted being lost preferred.

In this form, the polyamidoamine bears pendant groups corresponding to the formula:

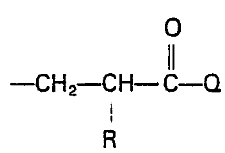

wherein R is as defined hereinbefore and Q is OH, $NH_2$ or alkoxy having from 1 to 10 carbon atoms. It is understood that the moieties represented by Q may be the same or different in the same molecule of the

polyamidoamine. For example, if a single unsaturated carboxylic compound is reacted with the linear polyamidoamine, all of the moieties represented by Q will be the same. However, if a mixture of unsaturated carboxylic compounds, e.g., acrylic acid and acrylamide is employed, then the moieties represented by Q will be different. In order to form the desired branched polyamidoamine, this polyamidoamine bearing pendant carboxylic groups is reacted with an alkylenediamine or polyalkylene polyamine, which optionally bears hydroxyl alkyl moieties. However, prior to the introduction of the alkylenediamine or polyalkylene polyamine, it is desirable to remove essentially all unreacted carboxylic compounds, usually by distillation. The amount of alkylenediamine or polyalkylene polyamine employed is that amount which is sufficient to suppress crosslinking of the polyamidoamine which can occur through the pendant carboxylic moieties. Beneficially, the alkylenediamine or polyalkylene polyamine is employed in a 200 to 300 mole percent excess, the pendant carboxylic moieties on the polyamidoamine. Exemplary alkylenediamines which can be reacted with the polyamidoamine having pendant carboxylic groups include ethylenediamine, propylenediamine and hexamethylenediamine. Illustrative polyalkylene polyamines include diethylenetriamine, triethylenetetramine, and tetraethylenepentamine. Also suitable are aminoethanolamine and N,N-dimethylethylenediamine. Of the foregoing amines, ethylenediamine and diethylenetriamine are preferred, with ethylenediamine being especially preferred.

The conditions which are desirable to promote the reaction of the polyamidoamine bearing the pendant carboxylic moieties with the alkylenediamine or polyalkylene polyamine will vary depending upon the carboxyl moiety (Q) of the pendant moiety. If Q is alkoxy, the reaction is a simple amidation of the pendant ester groups on the polyamidoamine which proceeds under relatively mild conditions, e.g., temperatures in the range from 20° to 200°C. This amidation of ester can be performed neat, but is preferably carried out in an inert diluent in which the polyamidoamine and the alkylenediamine or polyalkylene polyamine are soluble. While water is generally the preferred diluent in such an amidation reaction, it is generally desirable to minimize hydrolysis of the ester groups which can occur at higher temperatures by employing an excess of the diamine or polyamine reactant. Methanol and other lower alkanols are also advantageously employed as diluents in this mild amidation reaction.

In instances wherein Q is hydroxyl (OH) or amino ($NH_2$), it is necessary to employ more severe reaction conditions, e.g., temperatures in the range from 125° to 200°C, with temperatures from 150° to 190°C being preferred. Generally, in these reactions, a diluent is not necessary.

The time required to effect substantially complete reaction by either of the foregoing procedures will vary depending upon the reaction temperature and other factors such as the degree of substitution desired. Following completion of the reaction, the branched polyamidoamine is conveniently recovered by a distillation of solvents and/or byproducts from the polymer at reduced pressure.

The following examples are given to illustrate embodiments of the invention and should not be construed as limiting its scope. In these examples, all parts and percentages are by weight unless otherwise indicated.

## Example 1

### A. Preparation of Linear Polyamidoamine

Into a 250-ml three-neck round bottom flask equipped with a reflux condenser, air driven stirrer and addition funnel is charged 60.1 g (1 mole) of ethylenediamine. To the flask is then added with stirring 86.09 g (1 mole) of methyl acrylate by dripping it slowly into the flask over a period of 35 minutes. The temperature of the reaction mixture rises to 70°C during this addition and analysis of the reaction mixture using proton nuclear magnetic resonance indicates that all of the double bond has disappeared. The reflux condenser and addition funnel are replaced with a nitrogen sparge and a distillation apparatus. Using a steam bath, the reaction mixture is heated to 90°—95°C for 24 hours. After this time, the reaction mixture is a very viscous, light yellow amorphous solid. Analysis of this reaction mixture indicates that all of the ester moieties have reacted thereby yielding a linear polyamidoamine having a weight average molecular weight (Mw) as determined by light scattering of 4000-8000.

### B. Preparation of Branched Polyamidoamine

The aforementioned linear polyamidoamine is diluted with water to 65 percent solids. A 50 g portion of this solution is charged into a 250 ml three-neck round bottom flask equipped with stirrer and reflux condenser and 24.54 g (stroichiometric amount with respect to amino hydrogens of the linear polyamidoamine) of methyl acrylate is added at one time. The temperature of the reaction mixture increases from ambient to 35°C and is then heated with stirring at 80°C for four hours. Analysis of the reaction mixture at this point indicates approximately 95 percent of the methyl acrylate has been added to the polymer to provide a linear polyamidoamine having carboxylate ester branches. To this material is added approximately 70 g of ethylenediamine (4 moles of ethylenediamine per mole of ester) and the heating of the reaction mixture is continued for an additional four hours. Analysis of this mixture using proton NMR indicates complete conversion of the ester moieties to amide moieties. Excess ethylenediamine, methanol and water are removed using a water aspirator vacuum at 60°—95°C.

## Example 2

To a 250 ml flask was charged 109.2 grams of the linear polyamidoamine prepared in the first reaction in Example 1 and 50 ml of $CH_3OH$. The flask was equipped with a stirrer, a condenser and a means for

measuring temperature. To the polyamidoamine was added 27.49 grams of methyl acrylate dropwise with stirring at an initial temperature of 20°C. This addition introduces 1 equivalent of methyl acrylate for every 3 equivalents of amino hydrogens in the polyamidoamine. The temperature of the reaction mixture rose to 40°C during addition of the methyl acrylate. Immediately following the addition of the acrylate, 61.5 grams of ethylene diamine was introduced. The reaction mixture was then heated at 80°C for 18 hours at 90°C. The methanol and excess ethylene diamine were removed by distillation at reduced pressure. The resulting polymer was light tan in color and a tacky solid which was soluble in water or methanol.

Example 3

To a 500 ml flask was charged 165.9 grams of the linear polyamidoamine prepared in the first reaction in Example 1 and 100 grams of $CH_3OH$. The flask was equipped with a stirrer, a condenser and a means for measuring temperature. To the polyamidoamine was added dropwise 41.5 grams of methyl acrylate at a temperature of 70°C. Immediately following the addition of the acrylate, 43.4 grams of N,N-dimethyl ethylene diamine was added to the reaction mixture. The reaction mixture was heated at 115°C for 72 hours. The reaction mixture was then distilled to remove methanol. The resulting tacky, orange polymer was analyzed by proton magnetic resonance and infrared spectrophotometry and was determined to be a branched polyamidoamine bearing a plurality of pendant tertiary amine groups.

Examples 4 and 5 indicate that a branched polyamidoamine is a more powerful demulsifier than its linear counterpart.

Example 4

A biphasic liquid containing 95 percent tap water and 5 percent crude oil was combined with 50 parts per million (ppm) of a sodium salt of petroleum sulfonate. This liquid was blended at high speed for 5 minutes to prepare a stable emulsion. A linear polyamidoamine prepared from ethylene diamine and methyl acrylate and having a molecular weight of 1500 was charged to samples of the emulsion at loadings of 25, 50, 100 and 250 ppm. After 12 hours, no demulsification was observed.

A branched polyamidoamine having a molecular weight of about 2000 was tested as a demulsifier. This polymer was prepared by converting 30 percent of the amino hydrogens on the above-described linear polyamidoamine to groups of the formula

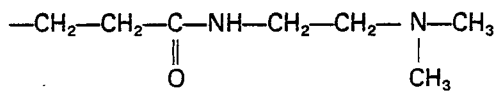

by sequential reaction of the linear polyamidoamine with methyl acrylate and then N,N-dimethyl ethylene diamine.

The branched polyamidoamine was introduced to samples of the aforementioned oil emulsion at loadings of 25, 50, 100 and 250 ppm. At the 100 ppm loading the emulsion yielded a clear aqueous phase after 12 hours. The branched polyamidoamine exhibited no demulsification activity at the other loadings tested.

Example 5

In a manner otherwise similar to Example 4, an oil-in-water emulsion was prepared using 250 ppm sodium oleate in place of the sodium salt of the petroleum sulfonate. The linear polyamidoamine described in Example 4 was charged to samples of the emulsion at loadings of 25, 50 and 74 ppm. Demulsification was observed after 1 hour only at the 74 ppm loading.

The branched polyamidoamine described in Example 4 was charged to samples of the emulsion at loadings of 25, 50 and 74 ppm. Demulsification was observed after 1 hour at the 25 ppm loading.

Ammonium polyamidoamines of this invention are advantageously characterized as having a polyamidoamine backbone bearing at least one pendant cross-linking ammonium moiety. Such ammonium moiety, hereinafter also referred to as $Z^{\oplus}$, is represented by the formula:

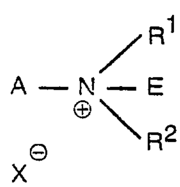

wherein each $R^1$ and each $R^2$ are independently hydrogen, halohydroxyhydrocarbyl, hydrocarbyl, hydroxyhydrocarbyl or aminohydrocarbyl, wherein amino is a secondary or tertiary amino; E is a monovalent hydrocarbon radical bearing an epoxy group or a group or groups capable of being converted to an epoxy group or E and $R^1$ are collectively a propylene radical or substituted propylene radical

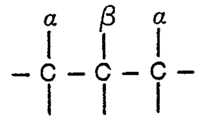

wherein the α-carbon substituents, if any, are $C_1$—$C_3$ alkyl and the β-carbon substituent, if any, is hydroxy, halo, hydrocarbyl or hydroxyhydrocarbyl; A is a divalent organic radical, e.g., alkylene or amidoamino; X is a monovalent or polyvalent anion common to conventional ammonium salts. For the purposes of this invention, the term "hydrocarbyl" is defined as a monovalent hydrocarbon radical such as alkyl, cycloalkyl, aryl, alkenyl and the like. Preferred ammonium polyamidoamines have at least one quaternary ammonium repeating unit represented by the formula:

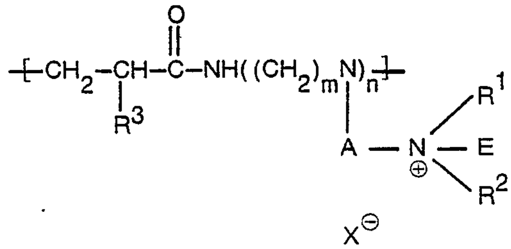

wherein A, E, X, $R^1$ and $R^2$ are as defined before except that neither $R^1$ nor $R^2$ is hydrogen; each $R^3$ is independently hydrogen or lower alkyl, e.g., methyl or ethyl, each m is a whole number from 2 to 6; and n is a whole number from 1 to 3, more preferably 1 or 2, most preferably 1.

In the more preferred quaternized polyamidoamines, A is an amidoamino radical represented by the formula:

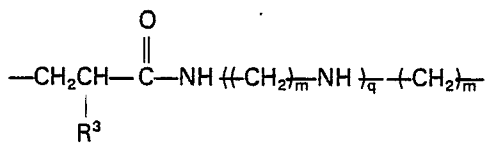

wherein $R^3$ and m are as defined hereinbefore and q is zero or a whole number from 1 to 2; each $R^1$ is independently alkyl, each E is independently oxiranyl or E and $R^1$ are collectively 2-hydroxypropylene. In the most preferred quaternized polyamidoamines, E and $R^1$ are collectively 2-hydroxypropylene such that the pendant quaternary ammonium moiety contains an azetidinium ring and is represented by the formula:

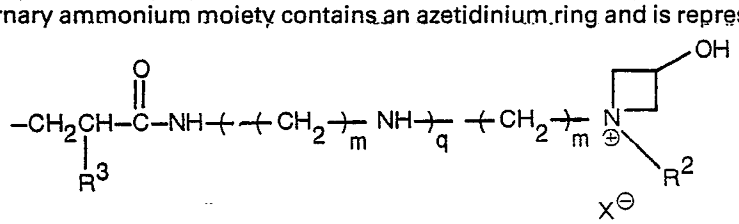

wherein $R^3$ is hydrogen or methyl; m is 2; q is 0, 1, 2 or 3; X is chloride and $R^2$ is alkyl, especially methyl, halohydroxyalkyl, especially 3-chloro-2-hydroxy propyl, or epoxy, especially 2,3-epoxy propyl. Preferably, the ammonium polyamidoamines of this invention are random polymers represented by the statistical formula:

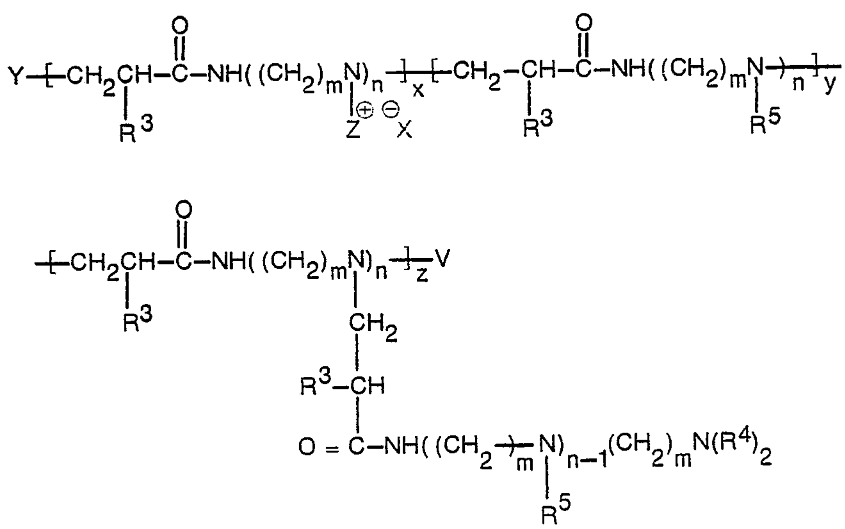

wherein $R^3$, $Z^{\oplus}$, $X^{\ominus}$, m and n are as defined hereinbefore; Y is a terminal group characteristic of polyamidoamines; V is hydrogen or the residue of polymerization to form a polyamidoamine; each $R^4$ is independently hydrogen or lower alkyl, e.g., $C_1$—$C_3$ alkyl; each $R^5$ is independently hydrogen or

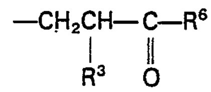

wherein $R^3$ is as defined before and $R^6$ is —$NH_2$; —OH or —$OR^7$ wherein $R^7$ is hydrocarbyl such as alkyl; x is a whole number from 1 to 1000; y is 0 or a whole number from 1 to 200; and z is 0 or a whole number from 1 to 200, provided that the ratio of x to (y + z) is at least 3:1, most preferably at least 10:1.

In the preparation of the ammonium polyamidoamines of this invention, it is preferred to successively react a linear polyamidoamine with an ethylenically unsaturated carboxylic acid, ester or amide and then with polyamine to form a branched polyamidoamine. The branched polyamidoamine is then contacted with epihalohydrin or other compound containing a moiety as defined by E hereinbefore to yield the desired ammonium polyamidoamine wherein the pendant ammonium moiety contains cross-linking functionality.

In the conversion of all or a portion of the pendant amine moieties of the branched polyamidamine to ammonium form, the branched polyamidoamine is contacted with an alkylating agent, a mixture of alkylating agents or other agents capable of converting the amine to ammonium form such that the pendant amino nitrogens of the branched polyamidoamine are converted to ammonium moieties represented by the following formula:—

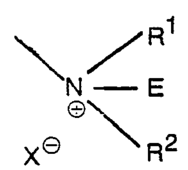

wherein each $R^1$, $R^2$, E and $X^{\ominus}$ are as defined hereinbefore.

In the preparation of the more preferred quaternized polyamidoamine, the branched polyamidoamine is reacted with an epoxy compound such as an epihalohydrin or an azetidinium forming compoound such as a 1,3-dihaloalkane under conditions sufficient to cause the pendant amine groups of the branched polyamidoamine to be alkylated. It is preferred to carry out this alkylation reaction in a solvent. If a solvent system is used in the formation of the branched polyamidoamine, then the same solvent or water diluted solvent may be used in the alkylation reaction. Thus, water, lower alkanols such as methanol and mixtures thereof are preferred solvents for the alkylation reaction. In general, sufficient solvent is employed to just solubilize the reactants and to permit easy stirring. Generally, solutions containing from 30 to 75 weight percent of the branched polyamidoamine are employed. Following dissolution of the branched polyamidoamine, the epihalohydrin or other suitable alkylating agent is added. In the case of epihalohydrin, the reaction is preferably carried out at temperatures in the range from 0 up to about 35°C. The resulting alkylated polyamidoamine, which is prepared using epihalohydrin, contains an epoxy group and/or halohydrin groups in the quaternary ammonium moiety. This material may be employed as is as a wet strength agent or may be converted to an azetidinium ring by dilution with water and heating. Pendant residual halohydrin groups may be converted to epoxy groups by contacting this material with a neutralizing agent for acid such as sodium hydroxide, calcium carbonate, sodium carbonate, sodium bicarbonate and the like under conditions described by Weissberger in "Heterocyclic Compounds with Three and Four Membered Rings," Interscience Publishers, Part 2, page 891 (1964). In instances wherein it is desirable to prepare a quaternary ammonium compound in which the amino nitrogen is substituted with an alkyl or hydroxyalkyl group in addition to an epoxy group or an azetidinium ring, the branched polyamidoaminé may be first alkylated with an alkyl halide or hydroxyalkyl halide or alkylene oxide and then subsequently alkylated with epihalohydrin.

The resulting ammonium polyamidoamine is now ready for use as an additive in the manufacture of paper or in the manufacture of textiles.

In the manufacture of paper having improved wet and dry strength, the method of the present invention is practiced in the following manner: (1) an aqueous suspension of cellulosic fibers is formed, (2) the ammonium polyamidoamine, advantageously in the form of a dilute aqueous solution, is added to the suspension and thereby absorbed onto the cellulosic fibers, and (3) the fibers are sheeted and dried using conventional procedures to form the desired cellulosic web.

The aqueous suspension of cellulosic fibers is formed in any conventional manner. Usually the fibers are beaten and refined, and the suspension is adjusted to convenient consistency, advantageously from 0.1 to 6 weight percent fibers based on the weight of the suspension. Because of the strenthening characteristics of the ammonium polyamidoamine, the amount of beating which is conventionally required can be reduced significantly. In addition, cheaper grades of pulp can be employed in the practice of this invention. The amount of ammonium polyamidoamine added is that which is effective to improve the wet

strength of the resulting web of the cellulosic fibers. Such amounts are preferably within the range from 0.1 to 2, especially from 0.25 to 0.75, weight percent based on the dry weight of the cellulosic fiber.

While the particular mode of adding the ammonium polyamidoamine to the suspension of cellulosic fibers is not particularly critical, it is desirable that the particular mode be sufficient to achieve uniform dispersal of the polyamidoamine throughout the suspension in order to ensure uniform absorption of the polymer by the fibers. The addition is therefore most effectively practiced by adding an aqueous solution containing from 0.1 to 10, preferably about 1, weight percent of the polyamidoamine to a turbulent stream of the fibrous suspension at the stock chest or at some other point near the web forming wire. It is suitable, however, to incorporate the polymer in the beater, hydropulper or stock chest. In the latter case, the stock is most advantageously agitated during the addition and the solution of the polymer is in a rather dilute form. The pH of the cellulosic fibrous suspension may be at any value between 4 and 8, preferably from 6 to 8.

In addition to the ammonium polyamidoamine, conventional amounts of other additives normally employed in the manufacture of paper such as pigments, fillers, stabilizers, retention aids and the like may be employed. Also, it is found that the addition of various anionic polymers such as polyacrylic acid or partially hydrolyzed polyacrylamides further enhance the strengthening characteristics of the ammonium polyamidoamine. When such anionic polymers are advantageously employed, it is preferred to employ a partially hydrolyzed polyacrylamide having a weight average molecular weight (Mw) from 200,000 to 500,000 and from 5 to 30 mole percent of amide groups converted to acid groups. When used, such anionic polymers are employed in amounts in the range from 0.1 to 1, preferably from 0.4 to 0.7 milliequivalents of anionic moiety of the anionic polymer per milliequivalents of cationic moiety of the ammonium polyamidoamine.

Cellulosic fibers most advantageously treated with the ammonium polyamidoamines of the present invention include bleached and unbleached sulfate (Kraft) pulps, bleached and unbleached sulfite pulps, bleached and unbleached soda pulps, neutral sulfite pulps, semi-chemical and chemical ground wood pulps, ground wood pulps and any combination of such fibers. The foregoing designations refer to wood pulp fibers which have been prepared by means of a variety of processes which are known in the pulp and paper industries.

In addition to the foregoing applications, the ammonium polyamidoamines of the present invention are also usefully employed as antistatic agents and dimension stabilizers for textiles. Textiles beneficially treated with such ammonium polyamidoamines include synthetic fibers such as nylon, polyolefins, polyesters and the like as well as blends of such fibers with natural fibers such as cotton, wool and the like.

Example 6

A. Quaternization of Branched Polyamidoamine

Into a 100 ml, three-neck round bottom flask equipped with an air driven stirrer and thermometer is charged 16.79 g of a 57 percent solution of the aforementioned branched polyamidoamine. The flask is cooled to 5°C and 7.73 g of epichlorohydrin (epi) (1:1 mole ratio of pendant amine hydrogen to epi) is added with stirring to the flask. The reaction mixture is allowed to warm to room temperature over a $7\frac{1}{2}$-hour period and 41.81 g of water heated to 70°C is added. The resulting stirred mixture is heated at 65°C for one hour to yield a clear solution and then allowed to cool to room temperature. A quaternized 100 percent branched polyamidoamine (Wet Strength Additive A) is recovered.

For the purposes of comparison, the foregoing quaternization reaction is repeated using 5.42 g of epichlorohydrin and 10.28 g of a 65 percent aqueous solution of a 50 percent branched polyamidoamine. The 50 percent branched polyamidoamine is produced according to the procedure described hereinbefore except that only 12.27 g (0.5 mole of methyl acrylate per 1 mole of amino hydrogens) is employed. The resulting quaternized 50 percent branched polyamidoamine is Wet Strength Additive B in Table I.

Also for comparison, the above quaternization reaction is repeated using 24.2 g of an aqueous solution containing 57 percent of a linear (non-branched) polyamidoamine produced by the foregoing procedure and 11.19 g of epichlorohydrin to produce a quaternized linear polyamidoamine (Wet Strength Additive C). Also for purposes of comparison, 10.61 g of a 65 percent solid solution of a 100 percent branched polyamidoamine made by the foregoing procedure and 5.60 g of epichlorohydrin (1:1 mole ratio of amine hydrogens to epichlorohydrin) to yield a polymer (Wet Strength Additive D) containing quaternary moieties represented by the following formula:

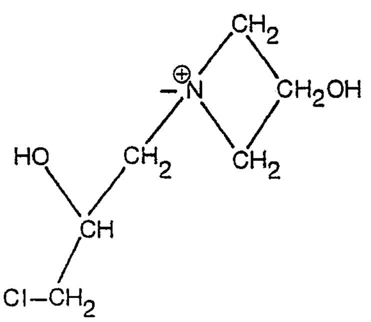

To 22.18 g of a 20 percent solution of this polymer in water is added 0.59 g of an aqueous solution of 50 percent sodium hydroxide and then maintained at room temperature for 6 days. Analysis of the resulting product indicates formation of a (Wet Strength Additive E) polymer having quaternary moieties represented by the following formula:

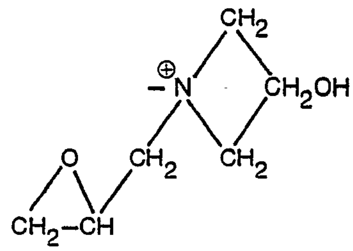

B. Treated Handsheet Preparation

A 1 percent slurry of bleached hard wood/soft wood Kraft (50/50) pulp is prepared in deionized water, and the pH of the resulting slurry is adjusted to 7. An aqueous solution containing 1 percent of a quaternized polyamidoamine as described hereinbefore is added to a 1 liter sample of the pulp slurry (5 cc of the 1 percent solution of polymer equal 10 pounds/ton of pulp). The slurry sample is mixed for 1 minute and then added to 7.5 liters of deionized water. The resulting pulp slurry is mixed in the proportionater section of a Noble and Wood apparatus. A 2 liter sample is then taken from the proportionater and added to 10 liters of deionized water in the headbox section. Three handsheets (2.5 g) are made from the slurry sample using a Noble and Wood handsheet mold (20 cm x 20 cm). The handsheets are dried on a Noble and Wood drier at 98°C (208°F) to give an average of 4 to 4.5 percent moisture content in the sheets. One-half of the sheets are cured at 85°C for 30 minutes in an oven. All of the sheets are soaked for at least one-half hour in deionized water, blotted dry and tested on a Mullins Burst tester. The results are reported as burst values in Table I. For the purpose of comparison, a control slurry is prepared which contains no polymeric additive formed into handsheets and tested for wet strength by the foregoing procedure. The results of this test are also recorded in Table I.

TABLE

| Sample No. | Polymeric Wet Strength Additive (1) Type | Degree of Branching, mol% | Amount kg/metric ton (lb/ton) | Wet Burst (2) kg/cm² (lb/in²) Uncured | Cured |
|---|---|---|---|---|---|
| C* | None | — | | 0.17 (2.5) | 0.18 (2.7) |
| 1 | A | 100 | 7 (15) | 0.94 (13.5) | 0.70 (10.0) |
| 2 | B | 50 | 7 (15) | 0.40 (5.8) | 0.20 (2.9) |
| A* | C | 0 | 7 (15) | 0.28 (4.0) | 0.21 (3.0) |
| 3 | D | 100 | 4.6 (10) | 0.79 (11.3) | 0.54 (7.7) |
| 4 | E | 100 | 4.6 (10) | 1.04 (14.9) | 0.82 (11.8) |

*Not an example of the invention.

(1) A—E as defined before in this Example.
Amount in kilogram of the named polymeric wet strength additive per metric ton of pulp.

(2) Test procedure of TAPPI T-403 ts-65 and values calculated according to TAPPI T-220 m-60.

As evidenced by the data of Table I, ammonium derivatives of branched polyamidoamines are better wet strength additives than ammonium derivatives of linear polyamidoamines.

## Claims

1. A branched polyamidoamine having a weight average molecular weight of at least 550 and consisting of repeating units corresponding to the formula I

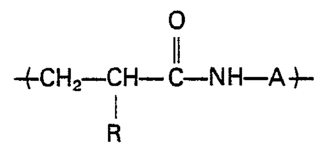

I

wherein R at each occurrence is independently hydrogen, methyl or ethyl; A is

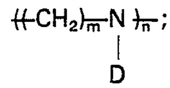

m is an integer of from 2 to 6 and n is an integer of from 1 to 3; D at each occurrence is independently —H or corresponds to the formula II

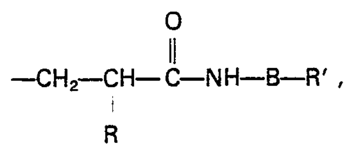

II

wherein R is as above defined.
with the proviso that at least about 10 percent of the groups represented by D correspond to formula II; B is

$\left(\left(CH_2\right)_x NR'\right)_y$ or 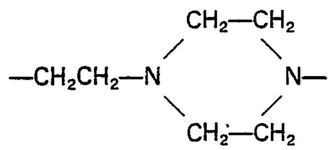

wherein x is an integer of from 2 to 10 and y is an integer of from 1 to 6; R' at each occurence is independently —H a $C_1$ to $C_4$ alkyl, or a $C_1$ to $C_4$ hydroxyalkyl.

2. A polyamidoamine as claimed in Claim 1 wherein B is $\left(\left(CH_2\right)_x NR'\right)_y$ and x and m are each independently 2 or 3.

3. A polyamidoamine as claimed in Claim 1 or Claim 2 wherein y and n are each independently 1 or 2.

4. A polyamidoamine as claimed in any one of the preceding claims wherein R' at each occurrence is independently —H, —$CH_3$ or —$CH_2OH$.

5. A polyamidoamine as claimed in Claim 4 wherein x and m are each 2, y and n are each 1, R' is —$CH_3$ at each occurrence and R is H at each occurrence.

6. A polyamidoamine as claimed in Claim 4 wherein X and m are each 2, y and n are each 1 and R' and R are H at each occurrence.

7. A polyamidoamine as claimed in any one of the preceding claims which bears a pendant ammonium moiety having a cross-linking functionality.

8. A polyamidoamine as claimed in Claim 7 wherein the pendant ammonium moiety is represented by the formula:

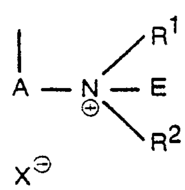

wherein each $R^1$ and each $R^2$ are independently hydrogen, halohydroxyhydrocarbyl, hydrocarbyl, hydroxyhydrocarbyl or aminohydrocarbyl, wherein amino is a secondary or tertiary amino; E is a monovalent hydrocarbon radical bearing an epoxy group or a group or groups capable of being converted to an epoxy group or E and $R^1$ are collectively a propylene radical or substituted propylene radical wherein the α-carbon substituents are $C_1$—$C_3$ alkyl and the β-carbon substituent is hydroxy, halo, hydrocarbyl or hydroxyhydrocarbyl; A is a divalent organic radical; X is a monovalent or polyvalent anion common to conventional ammonium salts.

9. A polyamidoamine as claimed in Claim 8 which contains a quaternary ammonium repeating unit represented by the formula:

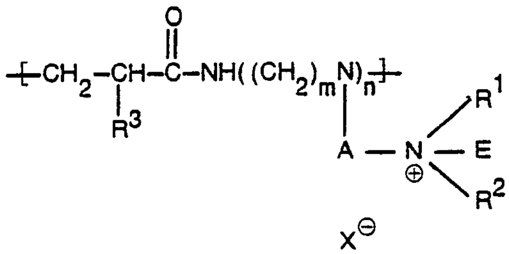

wherein A and X are defined in Claim 8, each $R^1$ and each $R^2$ are independently hydrocarbyl, hydroxyhydrocarbyl or aminohydrocarbyl wherein the amino is a secondary or tertiary amino; E is a monovalent hydrocarbon radical bearing an epoxy group or a group or groups capable of being converted to an epoxy group or E and $R^1$ are collectively a propylene radical or substituted propylene radical wherein the α-carbon substituents are $C_1$—$C_3$ alkyl and the β-carbon substituent is hydroxy, halo, hydrocarbyl or hydroxyhydrocarbyl; A is a divalent organic radical, X is a monovalent or polyvalent anion common to conventional ammonium salts; each $R^3$ is independently hydrogen or lower alkyl, e.g., methyl or ethyl, each m is a whole number from 2 to 6; and n is a whole number from 1 to 3.

10. A polyamidoamine as claimed in Claim 8, which is a random polymer represented by the statistical formula:

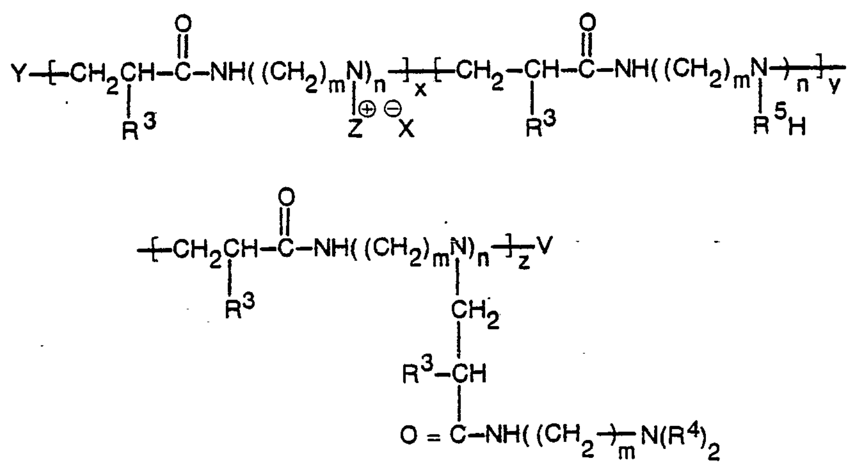

wherein Z is the ammonium moiety; each $R^3$ is independently hydrogen or methyl; each $R^4$ is independently hydrogen or lower alkyl; each $R^5$ is independently hydrogen or

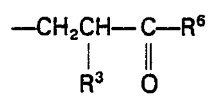

wherein $R^6$ is $NH_2$, OH or $OR^7$ wherein $R^7$ is hydrocarbyl; Y is a terminal group characteristic of a polyamidoamine; V is hydrogen or the residue of polymerization to form a polyamidoamine; each m is a whole number from 2 to 6; n is 1 or 2; x is a whole number from 1 to 1000; y is 0 or a whole number from 1 to 200; and z is 0 or a whole number from 1 to 200, provided that the ratio of x to (y + z) is at least 3:1.

11. A polyamidoamine as claimed in any one of Claims 8 to 10 wherein the pendant ammonium moiety is represented by the formula:

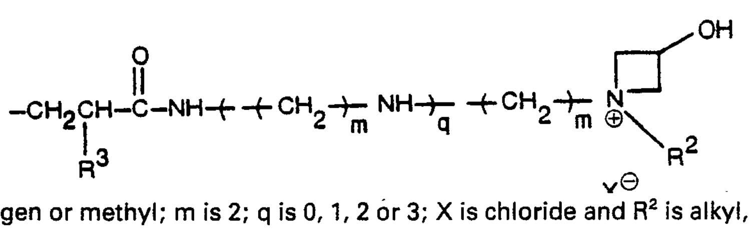

wherein $R^3$ is hydrogen or methyl; m is 2; q is 0, 1, 2 or 3; X is chloride and $R^2$ is alkyl, halohydroxyalkyl or epoxy.

12. A polyamidoamine as claimed in Claim 11 wherein $R^3$ is hydrogen and $R^2$ is 3-chloro-2-hydroxypropyl or 2,3-epoxypropyl.

13. A method for preparing a branched polyamidoamine as claimed in any one of Claims 1 to 12

comprising the steps of (1) contacting an alkylene diamine or a polyalkylene polyamine with an α,β-ethylenically unsaturated carboxylic acid of the formula

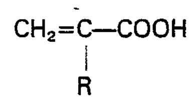

wherein R is hydrogen, methyl or ethyl, or the ester or amide derivative thereof, under conditions whereby a substituted linear polyamidoamine is formed, and (2) contacting the substituted linear polyamidoamine with a polyamine having at least 2 secondary and/or primary amine moieties under conditions whereby a branched amidoamine bearing a pendant amine moiety is formed, and optionally (3) contacting the branched polyamidoamine with an epihalohydrin under conditions whereby pendant curable ammonium moieties on the branched polyamidoamine are formed.

14. The use of polyamidoamine as claimed in any one of claims 1 to 12, or when produced by a process as claimed in claim 13, in improving the wet strength of paper.

**Patentansprüche**

1. Ein verzweigtes Polyamidamin mit einem durchschnittlichen Molekulargewicht (Gewichtsmittel) von mindestens 550, das aus sich wiederholenden Einheiten der Formel I

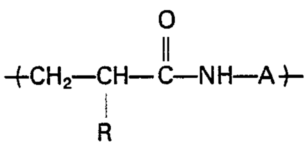 I

besteht, worin R jedesmal unabhängig voneinander Wasserstoff, Methyl oder Ethyl ist; A

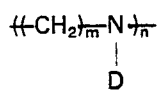

bedeutet; m eine ganze Zahl von 2 bis 6 und n eine ganze Zahl von 1 bis 3 ist; D jedesmal unabhängig voneinander —H ist oder der Formel II

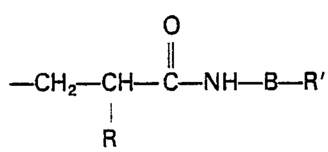 II

entspricht, worin R die oben angegebene Bedeutung besitzt, mit der Maßgabe, daß mindestens 10% der durch D dargestellten Gruppen der Formel II entsprechen; B

$-(-(CH_2)_x-NR'-)_y-$ oder 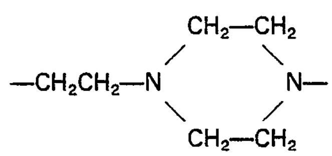

ist, worin x eine ganze Zahl von 2 bis 10 und y eine ganze Zahl von 1 bis 6 ist; R' jedesmal unabhängig voneinander —H, ein $C_1$—$C_4$-Alkyl oder ein $C_1$—$C_4$-Hydroxyalkyl ist.

2. Ein Polyamidoamin nach Anspruch 1, dadurch gekennzeichnet, daß B $(-(CH_2)_x-NR'-)_y$ ist, und x und m unabhängig voneinander 2 oder 3 sind.

3. Ein Polyamidoamin nach Anspruch 1 oder 2, dadurch gekennzeichnet, daß y und n unabhängig voneinander 1 oder 2 sind.

4. Ein Polyamidoamin nach einem der vorhergehenden Ansprüche, dadurch gekennzeichnet, daß R' jedesmal unabhängig voneinander —H, —$CH_3$ oder —$CH_2OH$ ist.

5. Ein Polyamidoamin nach Anspruch 4, dadurch gekennzeichnet, daß x und m 2 sind, y und n 1 sind, R' jedesmal —$CH_3$ ist und R jedesmal H ist.

6. Ein Polyamidoamin nach Anspruch 4, dadurch gekennzeichnet, daß X und m 2 sind, y und n 1 sind, und R' und R jedesmal H sind.

7. Ein Polyamidoamin nach einem der vorhergehenden Ansprüche, dadurch gekennzeichnet, daß es anhängende Ammoniumeinheiten trägt, die eine Vernetzungsfunktion besitzen.

8. Ein Polyamidoamin nach Anspruch 7, dadurch gekennzeichnet, daß die anhängende Ammoniumeinheit dargestellt wird durch die Formel:

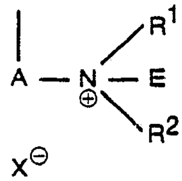

worin jedes $R^1$ und jedes $R^2$ unabhängig Wasserstoff, Halogenhydroxyhydrocarbyl, Hydrocarbyl, Hydroxyhydrocarbyl oder Aminohydrocarbyl sind, worin Amino eine sekundäre oder tertiäre Aminogruppe ist; E ein einwertiges Kohlenwasserstoffradikal ist, das eine Epoxygruppe oder eine Gruppe oder Gruppen trägt, die dazu fähig sind, in eine Epoxygruppe überführt zu werden, oder E und $R^1$ zusammen ein Propylenradikal oder substituiertes Propylenradikal sind, worin die α-Kohlenstoffsubstituenten $C_1$—$C_3$-Alkyl und der β-Kohlenstoffsubstituent Hydroxy, Halogen, Hydrocarbyl oder Hydroxyhydrocarbyl ist; A ein zweiwertiges organisches Radikal ist; X ein für Ammoniumsalze allgemein übliches einwertiges oder mehrwertiges Anion ist.

9. Ein Polyamidoamin nach Anspruch 8, dadurch gekennzeichnet, daß es eine sich wiederholende quaternäre Ammoniumeinheit enthält, die durch die Formel dargestellt wird:

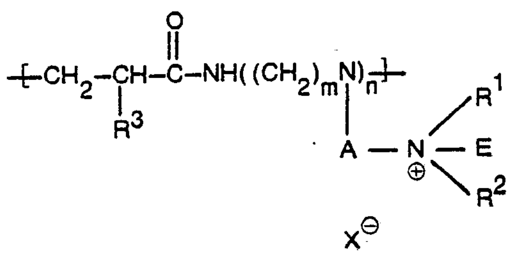

worin A und X die in Anspruch 8 angegebene Bedeutung besitzen, jedes $R^1$ und $R^2$ unabhängig voneinander Hydrocarbyl, Hydroxyhydrocarbyl oder Aminohydrocarbyl sind, worin die Aminogruppe eine sekundäre oder tertiäre Aminogruppe ist; E ein einwertiges Kohlenwasserstoffradikal ist, das eine Epoxygruppe trägt oder eine Gruppe oder Gruppen, die in eine Epoxygruppe überführt werden können, oder E und $R^1$ zusammen ein Propylenradikal oder substituiertes Propylenradikal sind, worin die α-Kohlenstoffsubstituenten $C_1$—$C_3$-Alkyl und der β-Kohlenstoffsubstituent Hydroxy, Halogen, Hydrocarbyl oder Hydroxyhydrocarbyl ist; A ein zweiwertiges organisches Radikal ist, X ein einwertiges oder mehrwertiges für Ammoniumsalze allgemein übliches Anion ist; jedes $R^3$ unabhängig Wasserstoff oder Niederalkyl ist, z.B. Methyl oder Ethyl, jedes m eine ganze Zahl von 2 bis 6 ist; und n eine ganze Zahl von 1 bis 3 ist.

10. Ein Polyamidoamin nach Anspruch 8, dadurch gekennzeichnet, daß es ein Randompolymer ist, das durch die statistische Formel dargestellt wird:

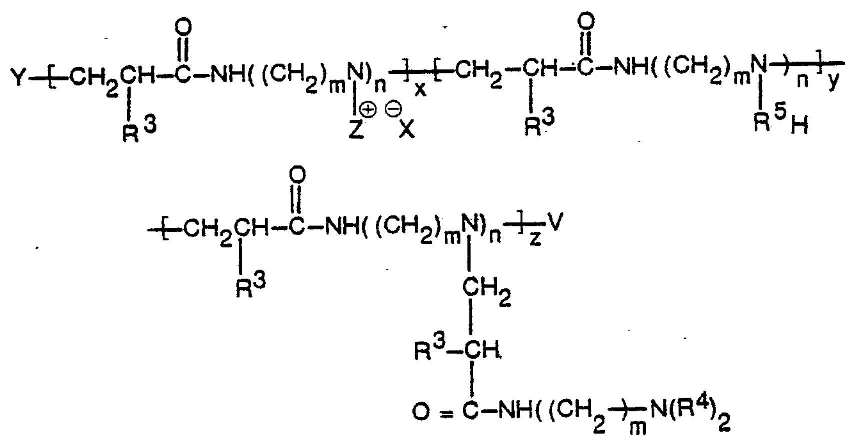

worin Z die Ammoniumeinheit ist; jedes $R^3$ unabhängig Wasserstoff oder Methyl ist; jedes $R^4$ unabhängig Wasserstoff oder ein Niederalkyl ist; jedes $R^5$ unabhängig Wasserstoff oder

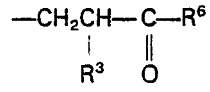

ist, worin $R^6$ $NH_2$, OH oder $OR^7$ ist, worin $R^7$ Hydrocarbyl ist; Y eine für ein Polyamidoamin charakteristische Endgruppe ist; V Wasserstoff oder der Polymerisationsrest zur Bildung eines Polyamidoamins ist; jedes m eine ganze Zahl von 2 bis 6 ist; n 1 oder 2 ist; x eine ganze Zahl von 1 bis 1000 ist; y 0 oder eine ganze Zahl von 1 bis 200 ist; und z 0 oder eine ganze Zahl von 1 bis 200 ist, mit der Maßgabe, daß das Verhältnis von x zu (y + z) mindestens 3:1 ist.

11. Ein Polyamidoamin nach einem der Ansprüche 8 bis 10, dadurch gekennzeichnet, daß die anhängende Ammoniumeinheit durch die Formel dargestellt wird:

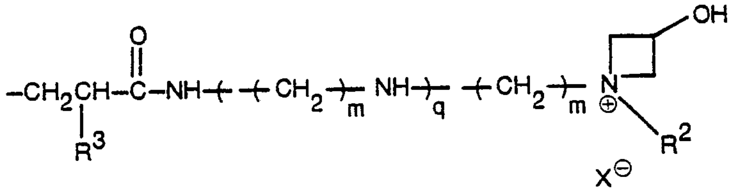

worin $R^3$ Wasserstoff oder Methyl ist; m 2 ist; q 0, 1, 2 oder 3 ist; X Chlorid ist und $R^2$ Alkyl, Halogenhydroxyalkyl oder Epoxy ist.

12. Ein Polyamidoamin nach Anspruch 11, dadurch gekennzeichnet, daß $R^3$ Wasserstoff und $R^2$ 3-Chlor-2-hydroxypropyl oder 2,3-Epoxypropyl ist.

13. Verfahren zur Herstellung eines verzweigten Polyamidoamins nach einem der Ansprüche 1 bis 12, dadurch gekennzeichnet, daß es die Stufen umfaßt von (1) Inkontaktbringen eines Alkylendiamins oder eines Polyalkylenpolyamins mit einer α,β-ethylenisch ungesättigten Carbonsäure der Formel

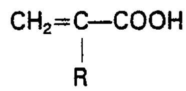

worin R Wasserstoff, Methyl oder Ethyl ist, oder dem Ester- oder Amidderivat davon, unter Bedingungen, unter denen ein substituiertes lineares Polyamidoamin gebildet wird, und (2) Inkontaktbringen des substituierten linearen Polyamidoamins mit einem Polyamin, das mindestens zwei sekundäre und/oder primäre Amineinheiten besitzt, unter Bedingungen, unter denen ein verzweigtes Amidoamin gebildet wird, das eine anhängende Amineinheit trägt, und gegebenenfalls (3) Inkontaktbringen des verzweigten Polyamidoamins mit einem Epihalohydrin unter Bedingungen, unter denen anhängende härtbare Ammoniumeinheiten am verzweigten Polyamidoamin gebildet werden.

14. Verwendung eines Polyamidoamins nach einem der Ansprüche 1 bis 12, oder hergestellt nach einem Verfahren nach Anspruch 13, zur Verbesserung der Naßfestigkeit von Papier.

**Revendications**

1. Polyamidoamine ramifiée possédant une masse moléculaire moyenne en poids d'au moins 550 et comprenant des motifs correspondants à la formule I

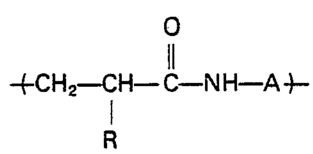 I

dans laquelle R, chaque fois qu'il se présente, est indépendamment l'hydrogène, le groupe méthyle ou éthyle; A est

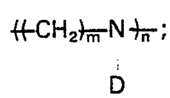

m est un nombre entier valant de 2 à 6 et n est un nombre entier valant de 1 à 3; D, chaque fois qu'il se présente, est indépendamment —H ou correspond à la formule II

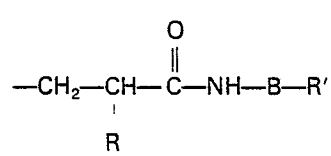 II

dans laquelle R est tel que défini ci-dessus, à condition qu'au moins environ 10 pour cent des groupes représentés par D correspondent à la formule II; B est

$+(CH_2)_x-NR'+_y$ ou 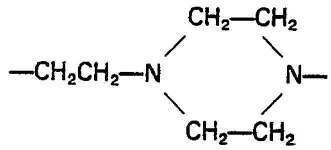

où x est un nombre entier valant de 2 à 10 et y est un nombre entier valant de 1 à 6; R', chaque fois qu'il se présente, est indépendamment —H, un groupe alkyle en $C_1$ à $C_4$ ou un groupe hydroxyalkyle en $C_1$ à $C_4$.

2. Polyamidoamine selon la revendication 1, caractérisée en ce que B est $((CH_2)_x-NR'+_y$ et x et m sont chacun indépendamment 2 ou 3.

3. Polyamidoamine selon la revendication 1 ou 2, caractérisée en ce que y et n sont chacun indépendamment 1 ou 2.

4. Polyamidoamine selon l'une quelconque des revendications précédentes, caractérisée en ce que R', chaque fois qu'il se présente, est indépendamment —H, $—CH_3$ ou $—CH_2OH$.

5. Polyamidoamine selon la revendication 4, caractérisée en ce que x et m sont chacun 2, y et n sont chacun 1, R' est $—CH_3$ chaque fois qu'il se présente, et R est H chaque fois qu'il se présente.

6. Polyamidoamine selon la revendication 4, caractérisée en ce que x et m sont chacun 2, y et n sont chacun 1 et R' et R sont H chaque fois qu'ils se présentent.

7. Polyamidoamine selon l'une quelconque des revendications précédentes, caractérisée en ce qu'elle porte un fragment ammonium accroché, possédant une fonctionnalité de réticulation.

8. Polyamidoamine selon la revendication 7, caractérisée en ce que le fragment ammonium accroché est représenté par la formule:

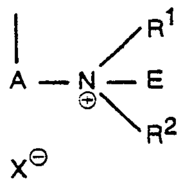

dans laquelle chaque $R^1$ et chaque $R^2$ sont indépendamment l'hydrogène, un groupe halohydroxyhydrocarboné, hydrocarboné, hydroxyhydrocarboné ou aminohydrocarboné, où le groupe amino est un groupe amino secondaire ou tertiaire; E est un radical hydrocarboné monovalent portant un groupe époxy ou un groupe ou des groupes capables d'être transformés en un groupe époxy, ou E et $R^1$ forment ensemble un radical propylène ou un radical propylène substitué dans lequel les substituants sur le carbone en α sont des groupes alkyle en $C_1—C_3$ et le substituant sur le carbone en β est le groupe hydroxyle, un atome d'halogène, un groupe hydrocarboné ou hydroxyhydrocarboné; A est un radical organique divalent; X est un anion monovalent ou polyvalent courant pour les sels d'ammonium classiques.

9. Polyamidoamine selon la revendication 8, caractérisée en ce qu'elle contient un motif d'ammonium quaternaire représenté par la formule:

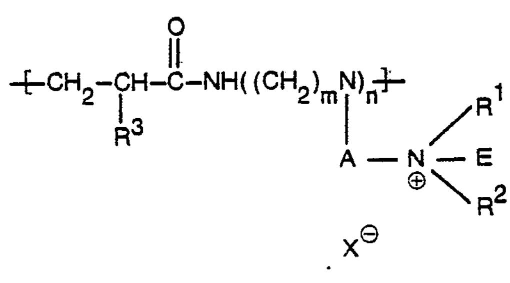

dans laquelle A et X sont tels que définis dans la revendication 8, chaque $R^1$ et chaque $R^2$ sont indépendamment un groupe hydrocarboné, hydroxyhydrocarboné ou aminohydrocarboné où le groupe amino est un groupe amino secondaire ou tertiaire; E est un radical hydrocarboné monovalent portant un groupe époxy ou un groupe ou des groupes capables d'être transformés en un groupe époxy, ou E et $R^1$ forment ensemble un radical propylène ou un radical propylène substitué dans lequel les substituants sur le carbone en α sont des groupes alkyle en $C_1—C_3$ et le substituant sur le carbone en β est le groupe hydroxyle, un atome d'halogène, un groupe hydrocarboné ou hydroxyhydrocarboné; A est un radical organique divalent, X est un anion monovalent ou polyvalent courant pour les sels d'ammonium classiques; chaque $R^6$ est indépendamment l'hydrogène ou un groupe alkyle inférieur, par exemple le groupe méthyle ou éthyle, chaque m est un nombre entier valant de 2 à 6; et n est un nombre entier valant de 1 à 3.

10. Polyamidoamine selon la revendication 8, caractérisée en ce qu'elle est un polymère statistique représenté par le formule statistique:

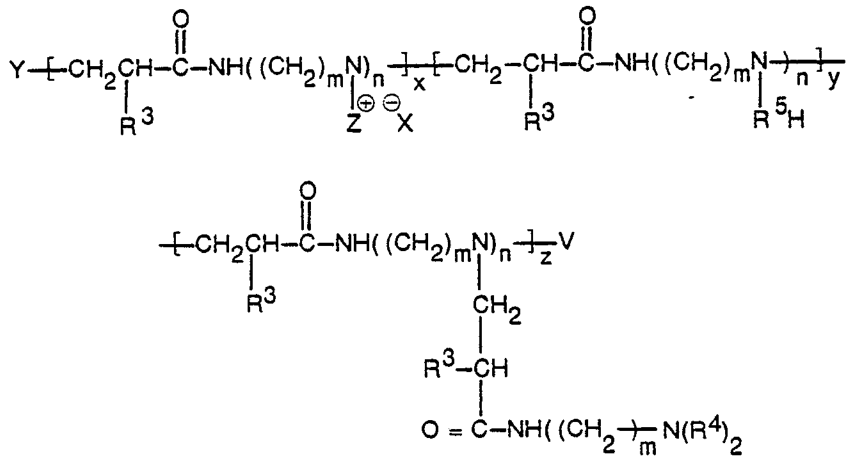

dans laquelle Z est le fragment ammonium; chaque $R^3$ est indépendamment l'hydrogène ou le groupe méthyle; chaque $R^4$ est indépendamment l'hydrogène ou un groupe alkyle inférieur; chaque $R^5$ est indépendamment l'hydrogène ou

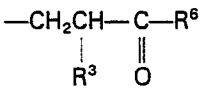

où $R^6$ est $NH_2$, OH ou $OR^7$ où $R^7$ est un groupe hydrocarboné; Y est un groupe terminal caractéristique d'un polyamidoamine; V est l'hydrogène ou le résidu de la polymérisation qui fournit une polyamidoamine; chaque m est un nombre entier valant de 2 à 6; n est 1 ou 2; x est un nombre entier valant de 1 à 1000; y est 0 ou un nombre entier valent de 1 à 200; et z est 0 ou un nombre entier valant de 1 à 200, à condition que le rapport de x à (y + z) soit d'au moins 3:1.

11. Polyamidoamine selon l'une quelconque des revendications 8 à 10, caractérisée en ce que le fragment ammonium accroché est représenté par la formule:

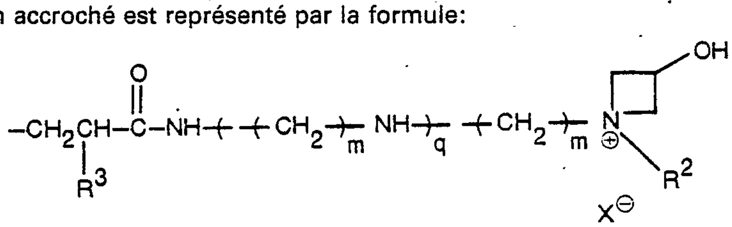

dans laquelle $R^3$ est l'hydrogène ou le groupe méthyle; m est 2; q est 0, 1, 2 ou 3; X est l'atome de chlore et $R^2$ est un groupe alkyle, halohydroxyalkyle ou époxy.

12. Polyamidoamine selon la revendication 11 caractérisée en ce que $R^3$ est l'hydrogène et $R^2$ est le groupe 3-chloro-2-hydroxypropyle ou 2,3-époxypropyle.

13. Procédé pour la préparation d'une polyamidoamine ramifiée selon l'une quelconque des revendications 1 à 12, qui comporte les étapes (1) de mise en contact d'une alkylène-diamine ou d'une polyalkylène-polyamine avec un acide carboxylique à insaturation α,β-éthylènique de formule

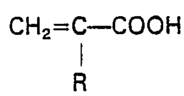

dans laquelle R est l'hydrogène, le groupe méthyle ou éthyle, ou son dérivé ester ou amide, dans des conditions où se forme une polyamidoamine linéaire substituée, et (2) de mise en contact de la polyamidoamine linéaire substituée avec une polyamine possédant au moins deux fragments amine secondaire et/ou primaire dans des conditions où se forme une amidoamine ramifiée portant un fragment amine accroché et éventuellement (3) de mise en contact de la polyamidoamine ramifiée avec une épihalohydrine dans des conditions où sont formés sur la polyamidoamine ramifiée des fragments ammonium accrochés et durcissables.

14. Utilisation d'une polyamidoamine selon l'une quelconque des revendications 1 à 12, ou d'une polyamidoamine produite par un procédé selon la revendication 13, pour améliorer la résistance du papier à l'état humide.